# EUROPEAN PATENT APPLICATION

(11) **EP 3 579 080 A1**
(43) Date of publication of application: **11.12.2019**
(21) Application number: 17899075.0
(22) Date of filing: 27.12.2017
(51) Int. Cl.: G06F 3/01

(54) **METHOD FOR DISPLAYING IMAGE PREVIEW INTERFACE, AND MOBILE TERMINAL**

(30) Priority: 28.02.2017 CN 201710112439
(71) Applicant: Vivo Mobile Communication Co., Ltd., Dongguan, Guangdong 523860 (CN)
(72) Inventor: WANG, Bowen, Dongguan Guangdong 523860 (CN)
(74) Representative: Isarpatent
(86) International application number: PCT/CN2017/119080
(87) International publication number: WO 2018/157659

(57) **Abstract**

A method for displaying an image preview interface and a mobile terminal are provided. The method includes: detecting whether a screen of the mobile terminal is in a landscape state, zooming out the image preview interface of the mobile terminal in a case that the screen of the mobile terminal is in the landscape state, the image preview interface including a preview image captured by a camera of the mobile terminal, and displaying the zoomed-out image preview interface.

## Description

### CROSS-REFERENCE TO RELATED APPLICATION

This application claims a priority to Chinese Patent Application No. 201710112439.7 filed on February 28, 2017, which is incorporated in its entirety by reference herein.

### TECHNICAL FIELD

The present disclosure relates to the field of display processing technology, in particular to a method for displaying an image preview interface and a mobile terminal.

### BACKGROUND

With the ongoing development of electronic technology, mobile terminals (such as cellphones and tablet computers) are provided with more and more powerful functions, such as taking photos. Meanwhile, screens of mobile terminals become larger and larger, a user can take photos with a mobile terminal, and in order to improve overall visual effects, some users may choose to take photos when the screens of mobile terminals are in a landscape state. In practice, when the screens of mobile terminals are in the landscape state, some holding gestures of the users may easily block the screen, which causes the users unable to see an entire preview interface during shooting, thereby affecting photographing effects.

### SUMMARY

A method for displaying an image preview interface and a mobile terminal are provided according to embodiments of the present disclosure, to solve a problem that photographing effects are affected due to the fact that holding gestures of users easily block screens in related art.

In a first aspect, a method for displaying an image preview interface is provided according to an embodiment of the present disclosure, applied to a mobile terminal, and the method includes:
detecting whether a screen of the mobile terminal is in a landscape state;
zooming out the image preview interface of the mobile terminal in a case that the screen of the mobile terminal is in the landscape state, where the image preview interface includes a preview image captured by a camera of the mobile terminal; and
displaying the zoomed-out image preview interface.

In a second aspect, a mobile terminal is further provided according to an embodiment of the present disclosure, which includes:
a detection module, configured to detect whether a screen of the mobile terminal is in a landscape state;
a zoom-out module, configured to zoom out an image preview interface of the mobile terminal in a case that the screen of the mobile terminal is in the landscape state, where image preview interface includes a preview image captured by a camera of the mobile terminal; and
a display module, configured to display the zoomed-out image preview interface.

In the method for displaying an image preview interface according to the embodiment of the present disclosure, whether a screen of the mobile terminal is in a landscape state is detected, an image preview interface of the mobile terminal is zoomed out in a case that the screen of the mobile terminal is in the landscape state, where the image preview interface includes a preview image captured by a camera of the mobile terminal, and the zoomed-out image preview interface is displayed.

### BRIEF DESCRIPTION OF THE DRAWINGS

In order to better clarify the technical solutions according to the embodiments of the present disclosure, the appended drawings involved in the description of the following embodiments are briefly introduced hereinafter. Apparently, the drawings only illustrate some embodiments of the present disclosure, and other drawings may be obtained based on these drawings by those skilled in the art without any inventive efforts.
Fig. 1 is a flowchart of a method for displaying an image preview interface according to a first embodiment of the present disclosure;
Fig. 2 is a schematic diagram of an image preview interface according to the first embodiment of the present disclosure;
Fig. 3 is a schematic diagram of an image preview interface according to the first embodiment of the present disclosure;
Fig. 4 is a schematic diagram of an image preview interface according to the first embodiment of the present disclosure;
Fig. 5 is a schematic diagram of an image preview interface according to the first embodiment of the present disclosure;
Fig. 6 is a flowchart of a method for displaying an image preview interface according to a second embodiment of the present disclosure;
Fig. 7 is a schematic diagram of an image preview interface according to the second embodiment of the present disclosure;
Fig. 8 is a flowchart of a method for displaying an image preview interface according to a third embodiment of the present disclosure;
Fig. 9 is a structural diagram of a mobile terminal according to a fourth embodiment of the present disclosure;
Fig. 10 is a structural diagram of a mobile terminal according to the fourth embodiment of the present disclosure;
Fig. 11 is a structural diagram of a mobile terminal according to the fourth embodiment of the present disclosure; and
Fig. 12 is a structural diagram of a mobile terminal according to a fifth embodiment of the present disclosure.

### DETAILED DESCRIPTION

The technical solutions according to embodiments of the present disclosure are clearly and completely described hereinafter in conjunction with the drawings. Apparently, the described are only some rather than all the embodiments of the present disclosure. All other embodiments obtained by those skilled in the art based on the embodiments according to the present disclosure without any inventive efforts shall fall within the scope of the present disclosure.

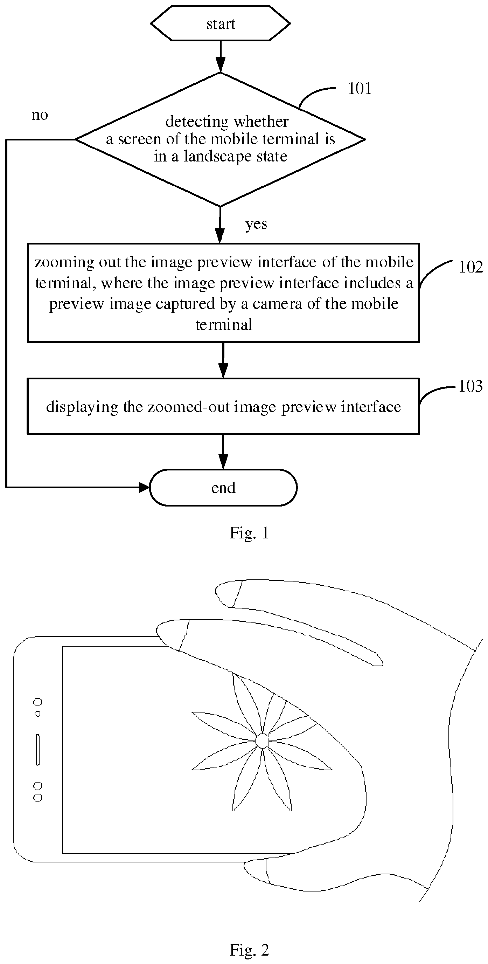

Reference is made to Fig. 1, which is a flowchart of a method for displaying an image preview interface according to a first embodiment of the present disclosure. The method for displaying an image preview interface is applied to a mobile terminal, which, as shown in Fig. 1, includes steps 101 to 103.

Step 101 includes detecting whether a screen of the mobile terminal is in a landscape state.

In this step of the method, whether the mobile terminal is in a landscape mode is detected, and step 102 proceeds in a case that mobile terminal is in the landscape mode; otherwise, the flow ends in a case that the mobile terminal is not in the landscape mode.

It should be noted that the landscape state in the embodiments of the present disclosure refers to a longer edge of a screen being in a horizontally-displayed state and whether the screen is in a horizontally-displayed state can be detected by a gravity sensor in the mobile terminal in the method. If the screen is in a horizontally-displayed state, it is determined that the image preview interface is in the landscape state; to the contrary, if the screen is not in a horizontally-displayed state, it is determined that the image preview interface is not in the landscape state. How to detect whether the screen is in a horizontally-displayed state by the gravity sensor falls within the scope of related technology, which is not described herein.

If it is detected that the image preview interface is in the landscape state by the method, it indicates that a user is holding the mobile terminal horizontally, during which a portion of the screen may be blocked due to limitation of dimensions and therefore a portion of the interface may be blocked, as shown in Fig. 2.

Step 102 includes zooming out the image preview interface of the mobile terminal, where the image preview interface includes a preview image captured by a camera of the mobile terminal.

In this step, when the camera of the mobile terminal is capturing an image, the image preview interface captured by the camera is scaled down in the method. That is, when the user is shooting by holding the mobile terminal in a landscape state, the image preview interface captured by the camera is zoomed out in the method. The camera of the mobile terminal may be a front camera or a rear camera, which is not limited in the embodiments of the present disclosure.

In this step, the image preview interface may be zoomed out directly or after receiving a trigger operation of the user on the image preview interface in the method, or the image preview interface may be zoomed out based on how the screen of the mobile terminal is held by the user.

The zooming out image preview interface may include zooming out the image preview interface to a predetermined scale, or determining a display scale based on the trigger operation of the user or how the screen of the mobile terminal is held by the user and zooming out the image preview interface to the determined display scale.

Step 103 includes displaying the zoomed-out image preview interface.

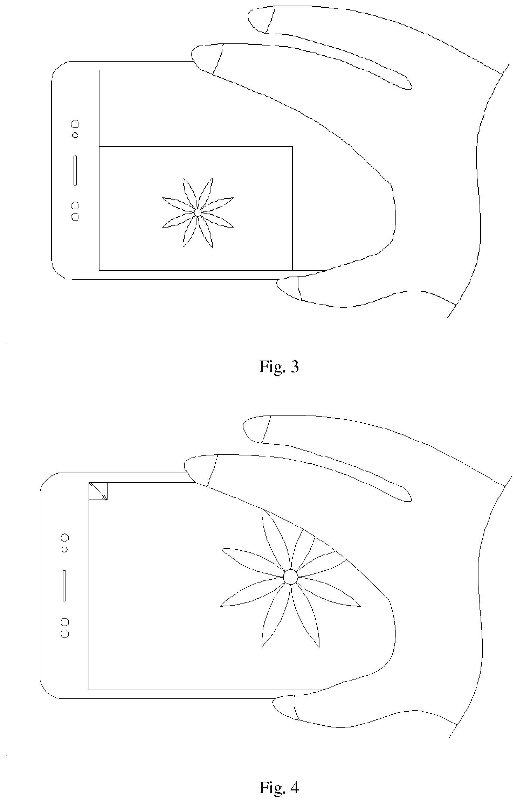

In this step, the zoomed-out image preview interface may be displayed in the method after step 102 for viewing of the user. As shown in Fig. 3, the entire image preview interface can be viewed by the user, improving photographing effects.

In an embodiment of the present disclosure, the mobile terminal above may be any mobile terminal with shooting functionality, such as a cellphone, a tablet personal computer (Tablet Personal Computer), a laptop computer (Laptop Computer), a personal digital assistant (personal digital assistant, abbreviated as PDA), a mobile internet device (Mobile Internet Device, MID) or a wearable device (Wearable Device).

Optionally, zooming out the image preview interface in a case that the screen of the mobile terminal is in a landscape state includes: zooming out the image preview interface in a case that the screen of the mobile terminal is in a landscape state and a zoom-out operation of the user on the image preview interface is detected.

In the embodiment, in a case that the screen of the mobile terminal is in a landscape state, the image preview interface is zoomed out upon detecting a zoom-out operation of the user on the image preview interface. The zoom-out operation may be a click operation or a slide operation on anywhere or a predetermined position of the image preview interface, or a press operation on a physical button of the mobile terminal.

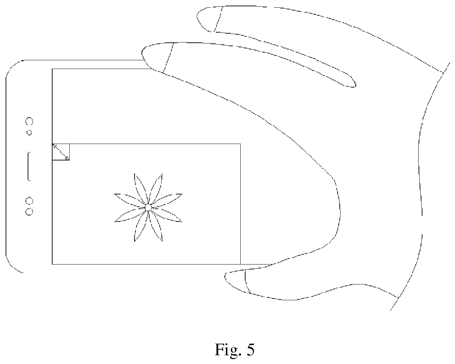

For example, the zoom-out operation may be consecutive click operation (such as double click or triple click) on anywhere or the predetermined position of the image preview interface, and the image preview interface is zoomed out by a predetermined scale in response to each consecutive click operation in the method. The zoom-out operation may also be a slide operation of a user finger on the image preview interface, for example, two fingers sliding in the same or opposite directions to zoom out the image preview interface, where the zoom-out scale may be a predetermined scale or determined based on a slide distance of the fingers. In practice, a virtual operating button may be provided within the image preview interface in the method, and the user can zoom out the image preview interface with the virtual operating button, as shown in Fig. 4 and Fig. 5. It should be noted that the above zoom-out operations are intended merely for purpose of description rather than limiting, and any other operations which can trigger adjustment of the display scale of the image preview interface shall also fall within the scope of the present disclosure.

Further, the display scale of the image preview interface is reduced in response to the zoom-out operation. In the embodiments of the present disclosure, the image preview interface may be adjusted to a predetermined scale in response to the zoom-out operation, or a display scale may be determined based on the zoom-out operation and then the image preview interface is adjusted to the display scale determined based on the zoom-out operation in the method, which is not limited in the present disclosure.

For example, in a case that the zoom-out operation is a double click and/or triple click operation on the image preview interface, the image preview interface may be zoomed out by a predetermined scale on each double click or triple click operation in the method. As an example, the image preview interface is zoomed out by 20% in response to each double click or triple click operation. It is understandable that in a case that the zoom-out operation is a slide operation, the image preview interface may be zoomed out by a predetermined scale after each slide operation, or a zoom-out scale is determined based on the slide operation and then the image preview interface is adjusted to the zoom-out scale as determined in the method. In addition, in a case that the user adjusts the display scale of the image preview interface by clicking the virtual button on the image preview interface or pressing the physical button of the mobile terminal, when the user performs the operation, the image preview interface may be directly zoomed out to the predetermined scale, for example, 80%. In practice, the display scale of the image preview interface may also be reduced by a predetermined scale in response to each press operation of the user on the physical button of the mobile terminal in the method, for example, the display scale of the image preview interface may be reduced by a predetermined scale (for example, 20%) each time the user presses a volume-down button or a volume-up button.

Optionally, zooming out the image preview interface includes zooming out the image preview interface based on a predetermined scale; and
displaying the zoomed-out image preview interface includes displaying the zoomed-out image preview interface in a predetermined position.

In the embodiment, zooming out the image preview interface includes zooming out the image preview interface based on a predetermined scale, and displaying the zoomed-out image preview interface includes displaying the zoomed-out image preview interface in a predetermined position (for example, left bottom corner or left top corner of the screen) in the method. That is, in the embodiment, in a case that it is detected the screen of the mobile terminal is in a landscape state, the image preview interface captured by the camera is zoomed out to the predetermined scale and the zoomed-out image preview interface is displayed in the predetermined position in the method.

The predetermined scale and the predetermined position may be respectively a fixed scale and a fixed position set by the user in advance, or a zoom-out scale and a display position of the image preview interface in last execution of the method.

In an embodiment of the present disclosure, after the display scale of the image preview interface is adjusted in response to the zoom-out operation in the method, a display position of the image preview interface with the adjusted display scale is adjusted as well, for example, the image preview interface with the adjusted display scale is directly displayed in the predetermined position, or is displayed a position where is not blocked by the user after detecting a position where the user holds the screen, which is not limited in the embodiment.

In the embodiment, the display scale of the image preview interface is adjusted to the predetermined scale in response to the zoom-out operation, and the image preview interface with the scale thereof adjusted is directly displayed in the predetermined position (for example, left bottom corner of the screen shown in Fig. 3 or Fig. 5) in the method.

In the embodiment, a display scale and a display position of the image preview interface in each shooting of the mobile terminal in a landscape mode are recorded in the method, and the predetermined scale and the predetermined position may be a display scale and a display position of the image preview interface in last shooting of the mobile terminal in the landscape mode recorded in the method. In this way, the image preview interface can be directly adjusted to the display scale and the display position in last shooting of the mobile terminal in the landscape mode in the method. Thus, if the user's holding habit in a landscape state does not change, it is unnecessary to adjust the image preview interface in each shooting of the mobile terminal in the landscape mode, bringing great convenience to the user.

In the embodiment, the camera is a front camera of the mobile terminal. In this case, when the user holds the mobile terminal in a landscape state to take a selfie, the preview interface may be easily blocked, affecting photographing effects. In view of this, in the embodiment, when the user holds the mobile terminal in a landscape state to take a selfie, the operation of the user can be received, and the display scale and the display position of the image preview interface can be adjusted, improving selfie photographing effects of the user.

In the method for displaying an image preview interface according to the first embodiment of the present disclosure, whether the screen of the mobile terminal is in a landscape state is detected, the image preview interface is zoomed out in a case that the screen of the mobile terminal is in a landscape state, where the image preview interface includes a preview image captured by the camera of the mobile terminal, and the zoomed-out image preview interface is displayed. In this way, the image preview interface can be zoomed out when the user shoots in a landscape state by the method for displaying an image preview interface according to the present disclosure, thereby effectively avoiding blocking the preview interface when the user holds the mobile terminal to shoot images, and improving photographing effects.

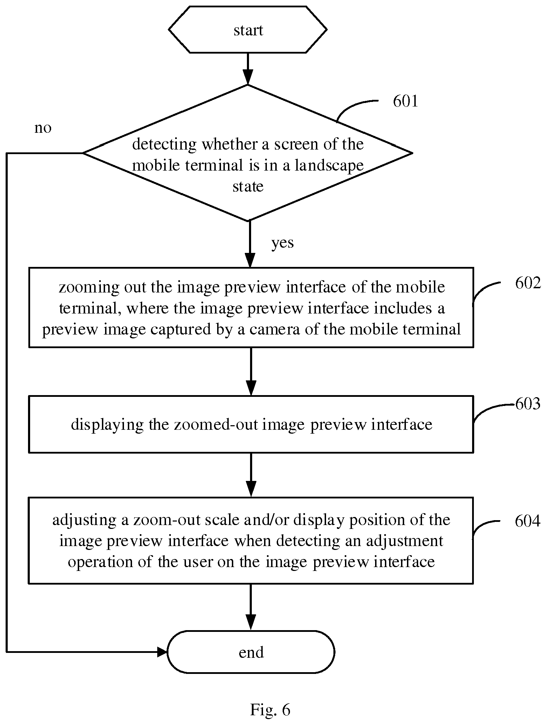

Reference is made to Fig. 6, which is a flowchart of a method for displaying an image preview interface according to a second embodiment of the present disclosure. The second embodiment differs from the first embodiment in that an adjustment operation of the user on the image preview interface can be detected and a zoom-out scale and/or display position of the image preview interface can be adjusted in response to the adjustment operation of the user on the image preview interface in the method. As shown in Fig. 6, the method for displaying an image preview interface includes steps 601 to 604.

Step 601 includes detecting whether a screen of the mobile terminal is in a landscape state.

In this step of the method, whether the mobile terminal is in a landscape mode is detected, and step 602 proceeds in a case that mobile terminal is in the landscape mode; otherwise, the flow ends in a case that the mobile terminal is not in the landscape mode.

Step 602 includes zooming out the image preview interface of the mobile terminal, where the image preview interface includes a preview image captured by a camera of the mobile terminal.

Step 603 includes displaying the zoomed-out image preview interface.

Steps 601 to 603 are the same as steps 101 to 103 in the first embodiment of the present disclosure, which are therefore not described herein redundantly.

Step 604 includes adjusting a zoom-out scale and/or display position of the image preview interface when detecting an adjustment operation of the user on the image preview interface.

In this step, the zoom-out scale and/or display position of the image preview interface is adjusted in response to the adjustment operation on detecting the adjustment operation of the user on the image preview interface in the method. In the embodiment, the adjustment operation may just be a zoom-out adjustment operation or a position adjustment operation, or may include both the zoom-out adjustment operation and the position adjustment operation. That is, on detecting the adjustment operation of the user on the image preview interface, it may be only the zoom-out scale or the display position of the image preview interface that is adjusted, or the zoom-out scale and the display position of the image preview interface may be both adjusted at the same time.

The zoom-out adjustment operation on the image preview interface may be the zoom-out operation on the image preview interface according to the first embodiment of the present disclosure, which is not described herein redundantly.

The position adjustment operation on the image preview interface may be a click or slide operation on anywhere or a predetermined position of the image preview interface, or a press operation on a physical button of the mobile terminal. It should be noted that the foregoing is merely an example of the position adjustment operation rather than a limitation, and any other operation capable of triggering the display position adjustment of the image preview interface shall fall within the scope of the present disclosure.

The display position of the image preview interface is adjusted in response to the position adjustment operation in the method. In an embodiment of the present disclosure, the image preview interface may be adjusted to a predetermined position in response to the position adjustment operation in the method, or a display position may be determined based on the position adjustment operation and then the image preview interface is adjusted to the display position determined based on the position adjustment operation, which is not limited in the present disclosure.

For example, in a case that the position adjustment operation is a click operation on the image preview interface, the image preview interface may be displayed in a predetermined position in response to the click operation in the method, for example, when the user clicks anywhere or a virtual button in the image preview interface, the image preview interface may be displayed in a predetermined position of the screen (for example, left bottom corner shown in Fig. 3 or Fig. 5) in the method. In a case that the position adjustment operation is a slide operation on the image preview interface, the image preview interface may be controlled to move in the screen in response to the slide operation in the method. It is understandable that the display position of the image preview interface may be moved in response to each press operation of the user on a physical button of the mobile terminal in the method, for example, the display position of the image preview interface may be moved in a first predetermined direction (for example, left, down or left-down) by a predetermined distance each time the user presses a volume-down button in the method, and moved in a second predetermined direction (for example, right, up or right-up) by a predetermined distance each time the user presses a volume-up button in the method, where the first and second predetermined directions may be any two direction different from each other. The above description is merely intended for purpose of example rather than limiting the present disclosure.

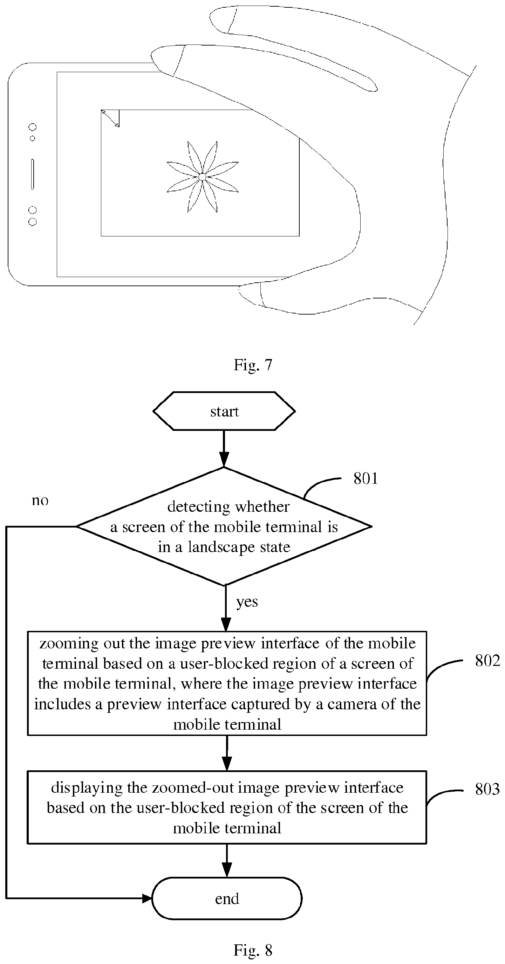

In this way, the user can adjust the display position of the image preview interface based on his or her holding gesture, so that the user can adjust the image preview interface to a display position convenient for viewing of the user, as shown in Fig. 7, which facilitates the user to adjust shooting position based on the preview interface when taking photos.

In the method for displaying an image preview interface according to the second embodiment of the present disclosure, it is detected whether the mobile terminal is in a landscape state, the image preview interface of the mobile terminal is zoomed out in a case that the mobile terminal is in a landscape state, where the image preview interface includes a preview interface captured by the camera of the mobile terminal, and the zoomed-out image preview interface is displayed, and the zoom-out scale and/or display position of the image preview interface is adjusted on detecting an adjustment operation of the user on the image preview interface. In this way, the image preview interface can be adjusted in response to an operation of the user when taking photos in a landscape state by the method for displaying an image preview interface according to the present disclosure, thereby effectively avoiding blocking the image preview interface when the user holds the mobile terminal, and improving photographing effects.

Reference is made to Fig. 8, which is a flowchart of a method for displaying an image preview interface according to a third embodiment of the present disclosure. The third embodiment differs from the first embodiment in that the method can sense a holding position when the user holds the mobile terminal and automatically adjust a zoom-out scale and/or display position of the image preview interface based on the holding position. As shown in Fig. 8, the method for displaying an image preview interface includes steps 801 to 803.

Step 801 includes detecting whether a screen of the mobile terminal is in a landscape state.

In this step, step 802 is performed in a case that the screen of the mobile terminal is in a landscape state; otherwise, the flow ends in a case that the screen of the mobile terminal is not in a landscape state.

Step 802 includes zooming out the image preview interface of the mobile terminal based on a user-blocked region of a screen of the mobile terminal, where the image preview interface includes a preview interface captured by a camera of the mobile terminal.

In this step, multiple sensors are provided at a side edge of the screen and/or on the screen of the mobile terminal and configured to sense the user-blocked region of the screen of the mobile terminal, where the user-blocked region is a region of the screen blocked by the user. In an embodiment of the present disclosure, the sensor may be a temperature sensor, and the user-blocked region of the screen of the mobile terminal can be determined based on temperature data obtained by multiple temperature sensors in the method. The sensor may also be a pressure sensor, and the user-blocked region of the screen of the mobile terminal can be determined based on pressure data obtained by multiple pressure sensors in the method.

In this step, the image preview interface of the mobile terminal is zoomed out based on the user-blocked region of the screen of the mobile terminal in the method. For example, a display scale may be determined based on the user-blocked region of the screen of the mobile terminal, and the image preview interface may be zoomed out to the display scale as determined in the method. Determining the display scale based on the user-blocked region of the screen of the mobile terminal may be determining the display scale only based on an area of the user-blocked region of the screen of the mobile terminal, or based on a ratio of the area of the screen of the mobile terminal by the user to an area of the screen, which is not limited in the embodiments of the present disclosure.

Step 803 includes displaying the zoomed-out image preview interface based on the user-blocked region of the screen of the mobile terminal.

In this step, the zoomed-out image preview interface may be displayed based on the user-blocked region of the screen of the mobile terminal in the method. Specifically, a target region may be determined based on the user-blocked region of the screen of the mobile terminal, and the zoomed-out image preview interface is displayed in the target region in the method. For example, a region of the screen which is not blocked by the user may be determined as the target region based on the user-blocked region of the screen of the mobile terminal, and the zoomed-out image preview interface is then displayed in the target region.

In this way, the image preview interface may be zoomed out or displayed based on how the user holds the mobile terminal (that is, how the screen is blocked when the user holds the mobile terminal), overcoming the problem that photographing effects are affected due to the fact that the preview interface may be blocked when the user holds the mobile terminal in a landscape state to shoot images.

Optionally, zooming out the image preview interface based on the user-blocked region of the screen of the mobile terminal includes:
calculating a display scale based on an area of the user-blocked region of the screen of the mobile terminal and an area of the screen of the mobile terminal; and
zooming out the image preview interface based on the display scale.

In this embodiment, zooming out the image preview interface based on the user-blocked region of the screen of the mobile terminal in the method specifically includes calculating a display scale based on an area of the user-blocked region of the screen of the mobile terminal and a total area of the screen and zooming out the image preview interface based on the display scale. Specifically, a ratio of the area of the user-blocked region of the screen of the mobile terminal to the total area of the screen is calculated and determined to be the display scale and the image preview interface is zoomed out to the display scale as calculated in the method.

In this way, the image preview interface is zoomed out based on the ratio of the area of the user-blocked region of the screen of the mobile terminal to that of the screen in the method, which can ensure that the zoom-out image preview interface can be fully displayed in a unblocked region of the screen, thereby effectively preventing the image preview interface from being blocked.

Optionally, displaying the zoomed-out image preview interface based on the user-blocked region of the screen of the mobile terminal includes:
displaying the zoomed-out image preview interface in a region of the screen of the mobile terminal other than the user-blocked region.

In this step, displaying the zoomed-out image preview interface based on the user-blocked region of the screen of the mobile terminal specifically includes displaying the zoomed-out image preview interface in a region of the screen of the mobile terminal other than the user-blocked region. That is, in this embodiment, any other region of the screen which is not blocked by the user may be determined as a target region based on the user-blocked region of the screen, and the zoomed-out image preview interface is displayed in the target region in the method. For example, as shown in Fig. 3, the zoomed-out image preview interface is displayed in a left bottom corner region of the screen in the method. In this way, the user can conveniently view the entire image preview interface when holding the cellphone, facilitating the user to adjust a position based on the preview interface and improving photographing effects.

In the method for displaying an image preview interface according to the third embodiment of the present disclosure, it is detected whether the screen of the mobile terminal is in a landscape state, the image preview interface is zoomed out based on the user-blocked region of the screen of the mobile terminal, where the image preview interface includes a preview interface captured by the camera of the mobile terminal, and the zoomed-out image preview interface is displayed based on the user-blocked region of the screen of the mobile terminal. In this way, the display position of the image preview interface can be automatically adjusted based on a holding gesture of the user when the user shoots images in a landscape mode with the method according to the embodiment, which can effectively prevent the image preview interface from being blocked when the user holds the mobile terminal and improve photographing effects.

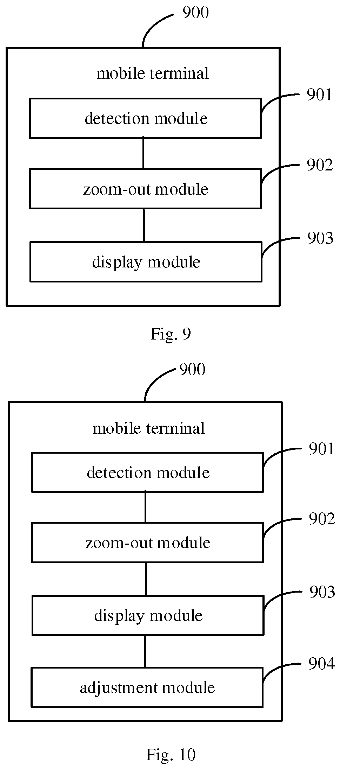

Reference is made to Fig. 9, which is a structural diagram of a mobile terminal according to a fourth embodiment of the present disclosure. As shown in Fig. 9, the mobile terminal 900 includes:
a detection module 901, configured to detect whether a screen of the mobile terminal is in a landscape state;
a zoom-out module 902, configured to zoom out the image preview interface of the mobile terminal in a case that the screen of the mobile terminal is in the landscape state, where the image preview interface includes a preview image captured by a camera of the mobile terminal; and
a display module 903, configured to display the zoomed-out image preview interface.

Optionally, the zoom-out module 902 is configured to zoom out the image preview interface in a case that the mobile terminal is in the landscape state and a zoom-out operation of a user on the image preview interface is detected.

Optionally, the zoom-out module 902 is configured to zoom out the image preview interface based on a predetermined scale in a case that the mobile terminal is in the landscape state, and the display module 903 is configured to display the zoomed-out image preview interface in a predetermined position.

Optionally, the mobile terminal further includes an adjustment module 904 configured to adjust a zoom-out scale and/or display position of the image preview interface when detecting an adjustment operation of the user on the image preview interface.

Optionally, the zoom-out module 902 is configured to zoom out the image preview interface based on a user-blocked region of the screen of the mobile terminal, in a case that the mobile terminal is in a landscape state; and the display module 903 is configured to display the zoomed-out image preview interface based on the user-blocked region of the screen of the mobile terminal.

Optionally, the zoom-out module 902 includes:
a calculation sub-module 9021, configured to calculate a display scale based on an area of the user-blocked region of the screen of the mobile terminal and a total area of the screen of the mobile terminal; and
a zoom-out sub-module 9022, configured to zoom out the image preview interface based on the display scale.

Optionally, the display module 903 is configured to display the zoomed-out image preview interface in a region of the screen of the mobile terminal other than the user-blocked region.

The mobile terminal 900 can implement the steps performed by the mobile terminal according to the method embodiments as shown in Fig. 1 to Fig. 8, which is not described redundantly herein for purpose of conciseness.

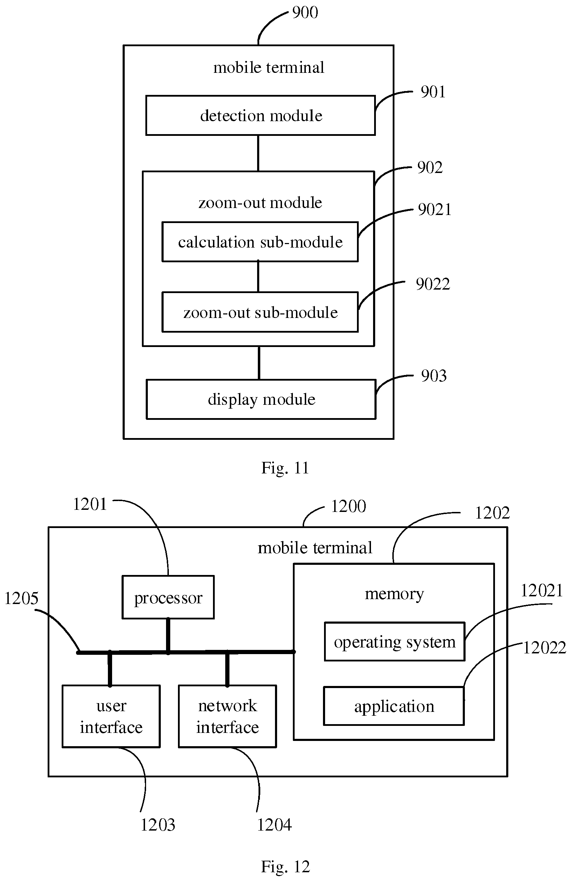

Reference is made to Fig. 12, which is a schematic structural diagram of a mobile terminal 1200 according to a fifth embodiment of the present disclosure. As shown in Fig. 12, the mobile terminal 1200 includes at least one processor 1201, a memory 1202, at least one user interface 1203 and a network interface 1204. The components of the mobile terminal 1200 are coupled by a bus system 1205. Understandably, the bus system 1005 is configured to implement connections and communications between the components. In addition to a data bus, the bus system 1205 further includes a power supply bus, a control bus and a state signal bus. For clarification considerations, the various buses are denoted by bus system 1205 in Fig. 12.

The user interfaces 1203 may include a display, a keyboard, or a click device, such as a mouse, a trackball, a touchpad or a touch screen.

It is understandable that the memory 1202 in the embodiments of the present disclosure may be a volatile memory or a non-volatile memory, or may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), or an electrically erasable programmable read-only memory (Electrically EPROM, EEPROM) or a flash memory. The volatile memory may be a random access memory (Random Access Memory, RAM) that acts as a high-speed external cache. By way of example instead of limitation, many kinds of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDRSDRAM), enhanced synchronous dynamic random access memory (Enhanced SDRAM, ESDRAM), synchlink connection dynamic random access memory (Synchlink DRAM, SDRAM) and direct memory bus random access memory (Direct Rambus RAM, DRRAM). The memory 1202 of the systems and methods described herein is intended to include, but not limited to, these and any other suitable types of memories.

In some implementations, the memory 1202 stores elements, executable modules or data structures, or a subset thereof, or an extended set thereof: an operating system 12021 and an application 12022.

The operating system 12021 includes various system programs, such as a framework layer, a core library layer, a driver layer, and the like, for implementing various basic services and processing hardware-based tasks. The application 12022 includes various applications, such as a media player (Media Player), a browser (Browser), and the like, for implementing various application services. A program implementing the methods according to the embodiments of the present disclosure may be included in the application 12022.

In an embodiment of the present disclosure, by invoking a program or instructions stored in the memory 1202, which may be a program or instructions stored in the application 12022, the processor 1201 is configured to:
detect whether a screen of the mobile terminal is in a landscape state;
zoom out the image preview interface of the mobile terminal in a case that the screen of the mobile terminal is in the landscape state, where the image preview interface includes a preview image captured by a camera of the mobile terminal; and
display the zoomed-out image preview interface.

The methods according to the foregoing embodiments of the present disclosure can be applied to the processor 1201, or implemented by the processor 1201. The processor 1201 may be an integrated circuit chip with signal processing capabilities. In implementation, each step of the foregoing methods may be completed by an integrated logic circuit in form of hardware or instructions in form of software in the processor 1201. The processor 1201 above may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or any other programmable logic device, a discrete gate, a transistor logic device or a discrete hardware component, which can implement or carry out the methods, steps, and logical block diagrams according to the embodiments of the present disclosure. The general-purpose processor may be a microprocessor, or the processor may be any conventional processor. The steps of the methods according to the embodiments of the present disclosure may be directly implemented by a hardware decoding processor, or may be performed by a combination of hardware and software modules in the decoding processor. The software module may be located in a conventional storage medium such as a random access memory, a flash memory, a read-only memory, a programmable read-only memory, an electrically erasable programmable memory, or a registers. The storage medium is located in the memory 1202, and the processor 1201 reads the information in the memory 1202 and completes the steps of the above methods in combination with its hardware.

It is appreciated that the embodiments described herein can be implemented in the form of hardware, software, firmware, middleware, microcode, or a combination thereof. For hardware implementation, the processing unit can be implemented in one or more application specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, other electronics units for performing the functions according to the present disclosure or combinations of the above.

For software implementation, the technical solutions according to the present disclosure can be implemented by modules (e.g., processes, functions, and so on) for performing the functions according to the present disclosure. The software code can be stored in the memory and executed by the processor, and the memory can be implemented in the processor or outside the processor.

Optionally, zooming out, by the processor 1201, the image preview interface in a case that the screen of the mobile terminal is in the landscape state includes: zooming out the image preview interface in a case that the screen of the mobile terminal is in the landscape state and a zoom-out operation of a user on the image preview interface is detected.

Optionally, zooming out, by the processor 1201, the image preview interface includes zooming out the image preview interface based on a predetermined scale; and displaying, by the processor 1201, the image preview interface includes displaying the zoomed-out image preview interface in a predetermined position.

Optionally, after displaying the zoomed-out image preview interface, the processor 1201 is further configured to: adjust a zoom-out scale and/or display position of the image preview interface on detecting an adjustment operation of the user on the image preview interface.

Optionally, zooming out, by the processor 1201, the image preview interface includes zooming out the image preview interface based on a user-blocked region of the screen of the mobile terminal; and displaying, by the processor 1201, the image preview interface includes displaying the zoomed-out image preview interface based on the user-blocked region of the screen of the mobile terminal.

Optionally, zooming out, by the processor 1201, the image preview interface based on the user-blocked region of the screen of the mobile terminal includes:
calculating a display scale based on an area of the user-blocked region of the screen of the mobile terminal and a total area of the screen of the mobile terminal; and
zooming out the image preview interface based on the display scale.

Optionally, displaying, by the processor 1201, the zoomed-out image preview interface based on the user-blocked region of the screen of the mobile terminal includes:
displaying the zoomed-out image preview interface in a region of the screen of the mobile terminal other than the user-blocked region.

The mobile terminal 1200 can implement the processes performed by the mobile terminal 1200 according to the foregoing embodiments, which is not described redundantly herein for purpose of conciseness.

In the mobile terminal 1200 according to the embodiments of the present disclosure, it is detected whether the screen of the mobile terminal is in a landscape state, the image preview interface is zoomed out in a case that the mobile terminal is in a landscape state, where the image preview interface includes a preview interface captured by the camera of the mobile terminal, and the zoomed-out image preview interface is displayed. In this way, the image preview interface can be zoomed out when the user shoots images in the landscape state with the method for displaying an image preview interface according to the present disclosure, thereby overcoming the problem that photographing effects are affected due to the fact that the preview interface may be blocked when the user holds the mobile terminal.

Those skilled in the art will appreciate that the units and algorithm steps of the various examples described in conjunction with the embodiments according to the present disclosure can be implemented in the form of electronic hardware or a combination of computer software and electronic hardware. Whether these functions are performed in hardware or software depends on the specific application and design constraints of the technical solution. Those skilled in the art can use different methods to implement the described functions for each particular application, but such implementation should not be considered as beyond the scope of the present disclosure.

Those skilled in the art can clearly understand that for convenience and brevity of description, reference can be made to the corresponding processes in the foregoing method embodiment for specific operating processes of the system, the device and the units described above, which is therefore not described herein redundantly.

It should be understood that in the embodiments according to the present application, the disclosed apparatus and method may be implemented in other manners. For example, the apparatus embodiments described above are merely illustrative. For example, the division of the units is only a logical function division, and in practical implementation, there may be another manner of division. For example, multiple units or components may be combined or integrated into another system, or some features can be ignored or not implemented. In addition, the mutual coupling or direct coupling or communication connection shown or discussed may be implemented with some interfaces, and indirect coupling or communication connection between apparatuses or units may be electrical, mechanical or in other forms.

The units described as separate components may or may be not physically separated, and the components shown as units may or may be not physical units, that is, they may be located in one place or distributed to multiple network units. Some or all of the units may be selected according to practical needs to achieve the objective of the technical solutions of the embodiments.

In addition, functional units in various embodiments of the present disclosure may be integrated into one processing unit, or each unit may exist physically separately, or two or more units may be integrated into one unit.

In a case that the functions are implemented in the form of a software functional unit which is sold or used as a standalone product, the product may be stored in a computer readable storage medium. Based on such understanding, the essence or the portion of the technical solutions of the present disclosure that contributes to the prior art may be embodied in the form of a software product. The computer software product is stored in a storage medium, which includes instructions that cause a computer device (which may be a personal computer, a server or a network device) to perform all or part of the steps of the methods according to the embodiments of the present disclosure. The foregoing storage medium may include any storage medium that can store program codes, such as a USB flash drive, a mobile hard disk, a ROM, a RAM, a magnetic disk, or an optical disk.

The above-described embodiments are merely some specific embodiment of the present disclosure, and are not intended to limit the present disclosure. Modifications or substitutions can be easily made by those skilled in the art made within the scope of the present disclosure, and these modifications or substitutions shall fall within the scope of the present disclosure. Therefore, the scope of the present disclosure is best defined by the appended claims.

## Claims

1. A method for displaying an image preview interface, applied to a mobile terminal, comprising:
detecting whether a screen of the mobile terminal is in a landscape state;
zooming out the image preview interface of the mobile terminal in a case that the screen of the mobile terminal is in the landscape state, wherein the image preview interface comprises a preview image captured by a camera of the mobile terminal; and
displaying the zoomed-out image preview interface.

2. The method according to claim 1, wherein the zooming out the image preview interface of the mobile terminal in a case that the mobile terminal is in a landscape state comprises:
zooming out the image preview interface in a case that the mobile terminal is in the landscape state, and a zoom-out operation of a user on the image preview interface is detected.

3. The method according to claim 1, wherein the zooming out the image preview interface comprises zooming out the image preview interface based on a predetermined scale; and
the displaying the zoomed-out image preview interface comprises displaying the zoomed-out image preview interface in a predetermined position.

4. The method according to any one of claims 1 to 3, wherein after displaying the zoomed-out image preview interface, the method further comprises:
adjusting at least one of a zoom-out scale or a display position of the image preview interface when detecting an adjustment operation of a user on the image preview interface.

5. The method according to claim 1, wherein the zooming out the image preview interface comprises zooming out the image preview interface based on a user-blocked region of the screen of the mobile terminal, where the user-blocked region is a region of the screen blocked by the user; and
the displaying the zoomed-out image preview interface comprises displaying the zoomed-out image preview interface based on the user-blocked region of the screen of the mobile terminal.

6. The method according to claim 5, wherein the zooming out the image preview interface based on the user-blocked region of the screen of the mobile terminal comprises:
calculating a display scale based on an area of the user-blocked region of the screen of the mobile terminal and a total area of the screen of the mobile terminal; and
zooming out the image preview interface based on the display scale.

7. The method according to claim 5 or 6, wherein the displaying the zoomed-out image preview interface based on the user-blocked region of the screen of the mobile terminal comprises:
displaying the zoomed-out image preview interface in a region of the screen of the mobile terminal other than the user-blocked region.

8. A mobile terminal, comprising:
a detection module, configured to detect whether a screen of the mobile terminal is in a landscape state;
a zoom-out module, configured to zoom out an image preview interface of the mobile terminal in a case that the screen of the mobile terminal is in the landscape state, wherein the image preview interface comprises a preview image captured by a camera of the mobile terminal; and
a display module, configured to display the zoomed-out image preview interface.

9. The mobile terminal according to claim 8, wherein
the zoom-out module is configured to zoom out the image preview interface in a case that the mobile terminal is in the landscape state and a zoom-out operation of a user on the image preview interface is detected.

10. The mobile terminal according to claim 8, wherein
the zoom-out module is configured to zoom out the image preview interface based on a predetermined scale in a case that the mobile terminal is in the landscape state; and
the display module is configured to display the zoomed-out image preview interface in a predetermined position.

11. The mobile terminal according to any one of claims 8 to 10, further comprising:
an adjustment module, configured to adjust at least one of a zoom-out scale or a display position of the image preview interface when detecting an adjustment operation of a user on the image preview interface.

12. The mobile terminal according to claim 8, wherein
the zoom-out module is configured to zoom out the image preview interface based on a user-blocked region of a screen of the mobile terminal, in a case that the screen of the mobile terminal is in the landscape state, where the user-blocked region is a region of the screen blocked by the user; and
the display module is configured to display the zoomed-out image preview interface based on the user-blocked region of the screen of the mobile terminal.

13. The mobile terminal according to claim 12, wherein the zoom-out module comprises:
a calculation sub-module, configured to calculate a display scale based on an area of the user-blocked region of the screen of the mobile terminal and a total area of the screen of the mobile terminal; and
a zoom-out sub-module, configured to zoom out the image preview interface based on the display scale.

14. The mobile terminal according to claim 12 or 13, wherein
the display module is further configured to display the zoomed-out image preview interface in a region of the screen of the mobile terminal other than the user-blocked region.

15. A mobile terminal, comprising:
at least one processor, a memory, at least one network interface, a user interface, and a bus system,
wherein the at least one processor, the memory, the at least one network interface and the user interface are coupled together by the bus system, and the at least one processor is configured to perform the method for displaying the image preview interface according to any one of claims 1 to 7 by invoking a program or instructions stored in the memory.

16. A computer readable storage medium, wherein a computer program is stored thereon, and the program is executed by a processor to implement the method for displaying the image preview interface according to any one of claims 1 to 7.
